# FASCICULE DE BREVET EUROPEEN

(11) **EP 1 688 634 B1**
(45) Date de publication et mention de la délivrance du brevet: **19.03.2008**
(21) Numéro de dépôt: 06101037.7
(22) Date de dépôt: 30.01.2006
(51) Int. Cl.: F16D 23/14

(54) **Dispositif de montage d'un palier sur un élément de transmission**
Befestigungsvorrichtung eines Lagers auf einem Getriebeelement
Mounting device for a bearing on a transmission element

(30) Priorité: 31.01.2005 FR 0550281
(43) Date de publication de la demande: 09.08.2006
(73) Titulaire: Valeo Embrayages, 80000 Amiens Cedex 1 (FR)
(72) Inventeur: Thomire, Sylvain Valeo Embrayages, 80000 Amiens (FR); Bussit, Sylvain, 37100 Tours (FR); Hamada, Virginie, 37000 Tours (FR)

(56) Documents cités:
- FR-A- 2 851 547
- US-A- 2 534 142
- US-A- 4 142 618
- US-A- 5 601 166

## Description

La présente invention concerne un dispositif de montage d'un palier sur un élément de transmission, en particulier sur un couvercle d'embrayage ou de double embrayage d'un moteur à combustion interne.

Il est connu d'utiliser un double embrayage permettant l'accouplement progressif d'un volant d'un moteur à combustion interne à deux arbres indépendants d'entrée d'une boîte de vitesses dans laquelle les pignons des rapports successifs sont disposés en alternance sur un arbre et sur l'autre. Chaque embrayage transmet le mouvement à l'un des arbres et le passage d'un rapport au suivant se fait en fermant l'embrayage du rapport à engager et en ouvrant simultanément l'embrayage du rapport à quitter. Avec une commande progressive de ces embrayages, on réalise un transfert de couple d'un rapport à l'autre sans interruption du couple.

Un double embrayage de ce type est décrit dans le document FR-A-2851547. Les deux embrayages sont montés dans un même couvercle lié en rotation au volant moteur. Deux commandes indépendantes permettent de régler le serrage des disques des embrayages pour transmettre le mouvement à deux arbres d'entrée coaxiaux disposés suivant l'axe du moteur. Un palier monté entre le couvercle de l'embrayage et le carter de la transmission est fixé au centre d'une face du couvercle située près de la transmission.

Le document US-A-5,601,166 décrit un boîtier d'embrayage à aiguilles comprenant un rebord radial découpé coopérant avec des dents d'un rebord radial d'un boîtier de roulement, avec des jeux radiaux et axiaux pour un montage flottant d'un boîtier sur l'autre.

Le document FR-0350713 décrit un mode de montage d'un palier comportant un roulement à billes sur un couvercle d'un double embrayage. Une commande fixée au carter de la transmission transmet une charge axiale au couvercle maintenu axialement en position par le palier qui reçoit en réaction cette même charge axiale. Un jonc est interposé entre le couvercle et des pattes radiales du roulement à billes pour solidariser ces deux pièces en direction axiale. La bague extérieure du roulement est centrée sur une collerette cylindrique du couvercle, réalisée directement par emboutissage de la tôle du couvercle.

La réalisation de cette collerette par emboutissage est économique mais entraîne des défauts de forme, de tolérance sur le diamètre et de circularité en particulier. Ces défauts rendent difficile le montage du roulement, surtout dans le cas où le roulement est serré dans le plan du chemin de roulement des billes et où la bague extérieure du roulement est une bague mince. Les défauts peuvent se traduire par un jeu ou un serrage important du roulement, voire une déformation excessive de la bague extérieure du roulement qui peut réduire beaucoup sa durée de vie.

La présente invention a notamment pour but d'éviter ces inconvénients et d'apporter une solution simple, de faible encombrement, efficace et économique au problème du montage d'un roulement sur une pièce ayant des défauts de géométrie.

Elle a en particulier pour objet le montage d'un roulement de centrage et de reprise d'effort dans un couvercle d'embrayage ou de double embrayage sans risquer de réduire la durée de vie de ce roulement.

Elle propose à cet effet un couvercle d'embrayage comprenant un palier de centrage et de reprise d'effort destiné à être monté entre le couvercle et un carter de transmission, dans une collerette cylindrique du couvercle centrée sur l'axe de rotation de l'embrayage, le palier comportant des éléments roulants et au moins une bague extérieure qui a un diamètre extérieur inférieur au diamètre intérieur de la collerette caractérisé en ce que cette bague extérieure est realisée en tôle et comprend à une extrémité un rebord annulaire radial orienté vers l'extérieur et dont la périphérie est découpée pour présenter des faces régulièrement réparties d'appui radial sur une surface cylindrique interne de la collerette pour un montage serré de la bague extérieure dans la collerette.

Un avantage essentiel du dispositif selon l'invention est que les faces d'appui sont distantes axialement des organes de roulement, de sorte que le centrage du roulement monté serré sur la collerette ne génère pas de déformation importante des surfaces de roulement.

Un autre avantage de ce roulement est que son centrage est réalisé de manière économique par découpe du rebord de la bague du roulement, sans pièce additionnelle.

Selon une autre caractéristique de l'invention, le rebord radial de la bague extérieure du roulement comprend des pattes radiales formées entre les faces d'appui et passant dans des fentes de la collerette, un jonc étant interposé axialement entre les pattes radiales et une face radiale de l'élément de transmission portant la collerette pour assurer le maintien axial du roulement.

D'une manière générale, le roulement peut constituer le palier de centrage d'un couvercle d'un embrayage ou d'un double embrayage comportant une double commande fixée sur le carter de la transmission.

L'invention sera mieux comprise et d'autres caractéristiques et avantages apparaîtront plus clairement à la lecture de la description détaillée ci-après donnée à titre d'exemple et faite en référence aux dessins annexés dans lesquels :
- la figure 1 est une vue schématique en coupe axiale d'un double embrayage à commande fixée au carter de la transmission ;
- la figure 2 est une demi-vue en coupe à plus grande échelle du roulement;
- la figure 3 est une vue partielle de face du roulement de la figure 2.

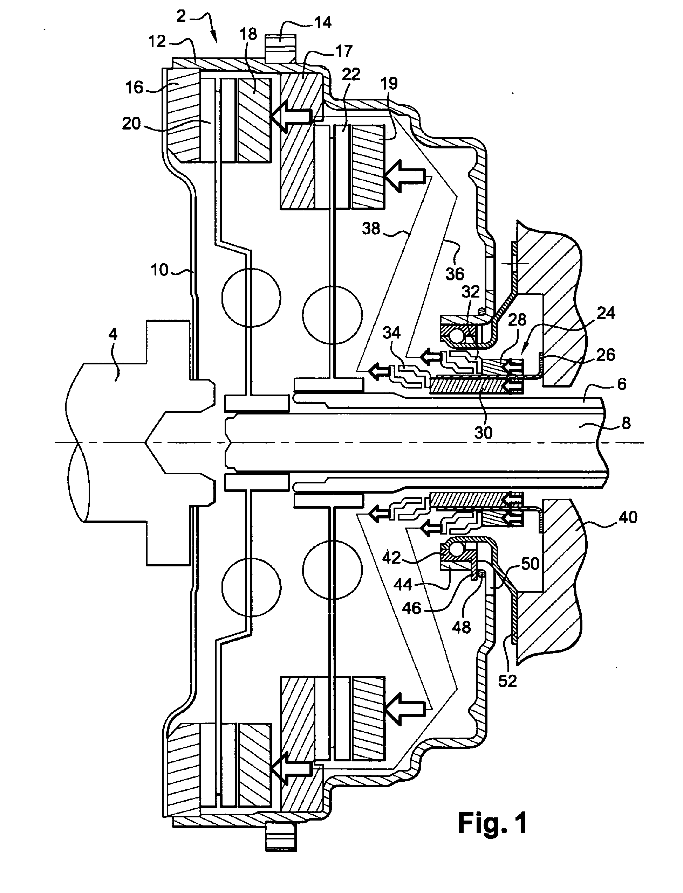

La figure 1 représente un double embrayage 2 fixé sur l'extrémité d'un vilebrequin 4 et entraînant deux arbres coaxiaux 6, 8 d'entrée d'une transmission. Ce double embrayage 2 comprend une tôle annulaire mince de liaison 10 possédant une certaine flexibilité suivant l'axe de rotation, fixée par sa partie centrale sur l'extrémité du vilebrequin 4 au moyen de vis non représentées. La périphérie extérieure de cette tôle 10 est fixée à un plateau de réaction 16 lui-même solidaire d'un couvercle 12 en tôle emboutie. Ce couvercle 12 porte un deuxième plateau de réaction 17 et reçoit par ailleurs une couronne de démarreur 14.

Les plateaux de réaction 16, 17 coopèrent chacun avec un plateau de pression 18, 19 respectivement, solidaire en rotation du couvercle et pouvant se déplacer en translation sur une petite course axiale pour le serrage d'un disque de friction 20, 22. Chaque disque de friction 20, 22 entraîne l'arbre intérieur 8 ou extérieur 6 respectivement par l'intermédiaire d'un moyeu comportant des cannelures axiales internes coopérant avec des cannelures externes de l'arbre d'entrée 6, 8.

Ces embrayages sont actionnés par un dispositif de double commande 24 comportant deux vérins 28, 30 guidés par un tube guide 26 qui est fixé sur un carter 40 de la transmission et centré par rapport aux arbres 6, 8. Chaque vérin 28, 30 prend un appui sur le carter 40 pour exercer une charge axiale sur une butée 32, 34 qui agit par l'intermédiaire d'un levier 36, 38 ayant un point d'appui sur le couvercle 12, sur le plateau de pression 18,19 correspondant. Le dispositif de double commande 24 en prenant appui sur le carter 40 peut appliquer une charge plus grande sur les disques d'embrayage 20. Sur la figure 1, les charges axiales sont représentées schématiquement par des flèches en trait noir épais.

Ces charges axiales agissent sur les plateaux de réaction 16, 17 fixés au couvercle 12 qui est centré et maintenu en position axiale par rapport au carter de transmission 40 par un palier comprenant un roulement 42. Dans la technique antérieure représentée en figure 1, ce roulement 42 a une bague extérieure ajustée dans une collerette cylindrique de révolution 44, qui est formée dans le couvercle 12 et centrée sur l'axe de rotation. Sa bague intérieure est constituée d'une tôle comprenant une partie radiale plane 52 en appui sur une face du carter de transmission 40 et fixée à celui-ci par des vis non représentées. Le roulement 42 réalise ainsi le centrage et le positionnement axial de la face du couvercle 12 tournée vers la transmission et transmet au carter 40 la force axiale appliquée sur le couvercle 12.

Des fentes 50 sont réalisées dans la collerette 44 sur une partie de sa longueur axiale et se continuent sur la face radiale du couvercle 12 reliée à cette collerette 44 . La bague extérieure du roulement 42 comporte des pattes radiales 46 qui s'étendent radialement au-delà de la surface externe de la collerette 44 dans les fentes 50, permettant la mise en place du roulement 42 dans la collerette 44, en l'introduisant du côté de la transmission. Les fentes 50 sont réalisées par une découpe de la tôle réalisée en parallèle avec les opérations d'emboutissage.

La charge axiale est transmise du couvercle 12 au roulement 42 par un jonc 48 placé entre les pattes radiales 46 et la face radiale du couvercle reliée à la collerette 44, et qui empêche le roulement de ressortir en direction de la transmission. Ce jonc enserre l'extérieur de la collerette et est ouvert, ce qui permet de l'introduire après la mise en place du roulement en l'écartant pour le passer au dessus des pattes radiales 46.

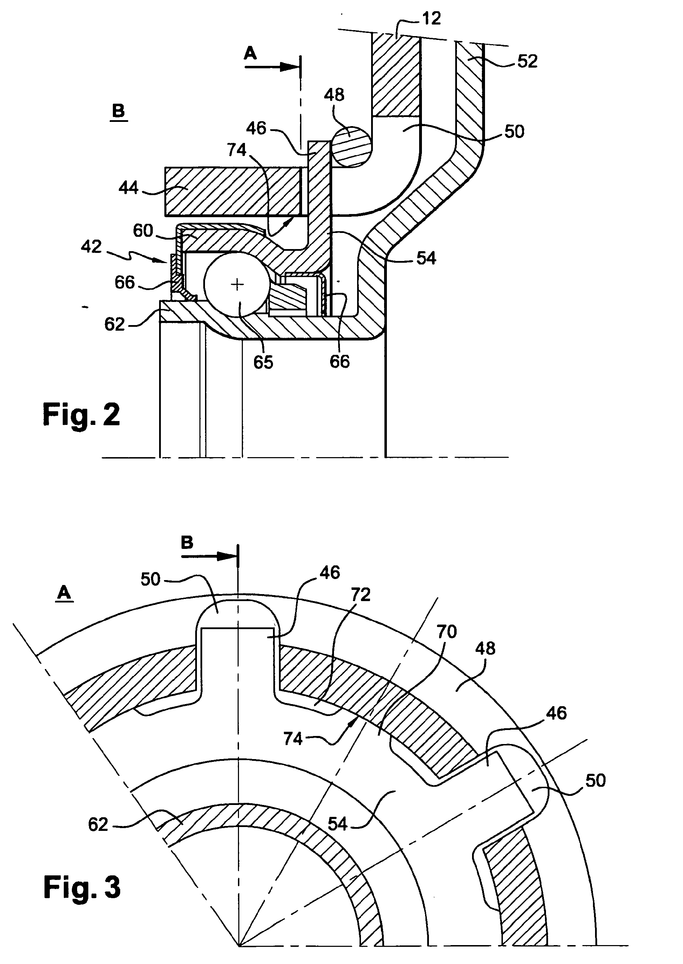

Les figures 2 et 3 représentent en détail le dispositif de montage du roulement selon l'invention.

Le couvercle 12 comprend la collerette 44 de centrage du palier qui comporte un roulement à billes 42. Le roulement à billes 42 comprend une bague intérieure 62 en tôle, une bague extérieure 60 en tôle, des billes 65 et des anneaux d'étanchéité 66. Le choix de la tôle pour réaliser les bagues 60, 62 permet de réaliser un roulement 42 économique ayant des formes obtenues simplement par découpe et emboutissage. Par contre, le centrage et le serrage de la bague extérieure en tôle 60 dans la collerette 44 du couvercle 12 sont plus difficiles à réaliser car les efforts doivent être bien contrôlés pour ne pas déformer cette bague mince.

La bague intérieure en tôle 62 comporte une portion axiale sur laquelle est formé un chemin de roulement pour les billes, cette portion axiale se prolongeant à une extrémité par une portion radiale 52.

La bague extérieure 60 comporte successivement, dans une section par un plan passant par l'axe et à partir de son extrémité côté moteur, une partie droite longitudinale, une partie incurvée vers l'axe suivant le rayon des billes et formant chemin de roulement, une courte partie droite longitudinale et un rebord radial 54 s'étendant vers l'extérieur qui forme une extrémité de la bague et qui est axialement espacé du chemin de roulement. Les parties droites longitudinales de la bague portent les anneaux d'étanchéité du roulement. Le diamètre extérieur de la bague extérieure 60 est inférieur au diamètre intérieur de la collerette 44 du couvercle 12. II est entendu par « diamètre extérieur de la bague extérieure » le diamètre de la surface de révolution de cette bague située axialement en dehors du rebord radial 54.

Des pattes 46 sont découpées dans le rebord radial 54 et s'étendent radialement dans des fentes 50 formées dans le couvercle 12. Les pattes 46 se prolongent au-delà de la surface externe de la collerette 44 et viennent en appui sur le jonc 48 interposé axialement entre les pattes 46 et la partie radiale plane du couvercle 12.

Pour assurer le centrage et le serrage radial de la bague extérieure 60 dans la collerette 44, des faces d'appui 70 sont formées entre les pattes 46 par découpe du rebord 54. Des échancrures 72 sont formées par découpe entre les faces d'appui 70 et les pattes 46. Les faces d'appui 70 se terminent radialement à l'extérieur par des bords convexes en arc de cercle.

Le centrage et le serrage du rebord radial 54 de la bague extérieure 60 sur la face cylindrique interne 74 de la collerette 44 sont réalisés par les surfaces constituées par l'épaisseur de la tôle découpée en arc de cercle formant les faces d'appui 70. Trois faces d'appui 70 au moins sont nécessaires, avec une découpe suffisamment précise pour définir un cercle de centrage. Le diamètre de ce cercle est compris dans une fourchette de valeurs qui tient compte des tolérances de fabrication des différents composants pour garantir une valeur de serrage acceptable.

Le serrage lors du montage entraîne par déformation élastique de la bague 60 un retrait des faces d'appui 70 vers l'axe de rotation. Les faces d'appui 70 étant axialement distantes du chemin de roulement des billes, la déformation de la bague extérieure 60 à leur niveau ne déforme pas ou très peu ce chemin de roulement, et la durée de vie du roulement est conservée.

D'une manière générale, le palier centré et serré dans l'élément de transmission peut comporter un roulement réalisé suivant diverses technologies, par exemple comportant des rouleaux à la place des billes.

L'élément de transmission peut faire partie d'un ensemble quelconque utilisé dans une transmission d'un véhicule, par exemple un embrayage simple ou double, un embrayage à sec ou dans l'huile, ou un double volant amortisseur.

## Revendications

1. - Couvercle d'embrayage comprenant un palier de centrage et de reprise d'effort destiné à être monté entre le couvercle et un carter de transmission (40), dans une collerette cylindrique (44) du couvercle centrée sur l'axe de rotation de l'embrayage, le palier comportant des éléments roulants et au moins une bague extérieure (60) qui a un diamètre extérieur inférieur au diamètre intérieur de la collerette (44) **caractérisé en ce que** cette bague extérieure (60) est réalisée en tôle et comprend à une extrémité un rebord annulaire radial (54) orienté vers l'extérieur et dont la périphérie est découpée pour présenter des faces (70) régulièrement réparties d'appui radial sur une surface cylindrique interne (74) de la collerette (44) pour un montage serré de la bague extérieure (60) dans la collerette (44).

2. - Couvercle d'embrayage selon la revendication 1, **caractérisé en ce que** le rebord annulaire de la bague extérieure (60) comprend des pattes radiales (46) s'étendant entre les faces d'appui (70) précitées et passant par des fentes de la collerette (50), un jonc (48) étant interposé axialement entre les pattes radiales (46) et une face radiale du couvercle (12) portant la collerette (44) pour assurer le maintien axial du palier (42).

3. - Couvercle d'embrayage selon la revendication 2, **caractérisé en ce que** les parties (72) du rebord radial (54) de la bague extérieure situées entre les faces d'appui (70) et les pattes radiales (46) sont échancrées ou découpées en direction de l'axe de rotation.

4. - Couvercle d'embrayage selon l'une des revendications précédentes, **caractérisé en ce que** les faces d'appui (70) sont formées par le bord périphérique du rebord radial (54) de la bague extérieure du palier.

5. - Couvercle d'embrayage selon l'une des revendications précédentes, **caractérisé en ce que** les faces d'appui (70) sont axialement distantes des éléments roulants (65) du palier.

6. -Couvercle d'embrayage selon l'une des revendications 1 à 5, **caractérisé en ce qu'**il constitue le couvercle d'un double embrayage comportant une double commande fixée sur le carter de transmission.

## Claims

1. Clutch cover comprising a centring and force-recovery bearing which is designed to be fitted between the cover and a transmission housing (40) in a cylindrical flange (44) of the cover which is centred on the axis of rotation of the clutch, the bearing comprising rolling elements and at least one outer ring (60) which has an outer diameter smaller than the inner diameter of the flange (44), **characterised in that** this outer ring (60) is made of metal plate and comprises at one end a radial annular shoulder (54) which is oriented towards the exterior, and the periphery of which is cut out in order to have regularly distributed radial support surfaces (70) on an inner cylindrical surface (74) of the flange (44) for clamped fitting of the outer ring (60) in the flange (44).

2. Clutch cover according to claim 1, **characterised in that** the annular shoulder of the outer ring (60) comprises radial lugs (46) which extend between the aforementioned support surfaces (70) and pass though slots (50) in the flange, a rod (48) being interposed axially between the radial lugs (46) and a radial surface of the cover (12) which supports the flange (44) in order to assure axial retention of the bearing (42).

3. Clutch cover according to claim 2, **characterised in that** the parts (72) of the radial shoulder (54) of the outer ring which are situated between the support surfaces (70) and the radial lugs (46) are scalloped or cut out in the direction of the axis of rotation.

4. Clutch cover according to one of the preceding claims, **characterised in that** the support surfaces (70) are formed by the peripheral edge of the radial shoulder (54) of the outer ring of the bearing.

5. Clutch cover according to one of the preceding claims, **characterised in that** the support surfaces (70) are axially spaced from the rolling elements (65) of the bearing.

6. Clutch cover according to one of claims 1 to 5, **characterised in that** it constitutes the cover of a double clutch comprising a double control which is secured to the transmission housing.

## Patentansprüche

1. Kupplungsdeckel mit einem Zentrierungs- und Kraftaufnahmelager, welches dazu bestimmt ist, zwischen dem Deckel und dem Gehäuse einer Kraftübertragung (40) in einem auf die Rotationsachse der Kupplung zentrieren zylindrischen Kragen (44) des Deckels montiert zu werden, wobei das Lager Wälzelemente und mindestens einen äußeren Ring (60) umfasst, welcher einen Außendurchmesser hat, der kleiner als der Innendurchmesser des Kragens (44) ist, **dadurch gekennzeichnet, dass** dieser Außenring (60) aus Blech besteht und an einem Ende einen nach außen orientierten radialen ringförmigen Rand (54) umfasst, dessen Umfang eingeschnitten ist, um regelmäßig verteilte Flächen (70) zur radialen Auflage auf einer zylindrischen Innenfläche (74) des Kragens (44) für eine eingespannte Montage des Außenrings (60) in dem Kragen (44) zu bilden.

2. Kupplungsdeckel nach Anspruch 1, **dadurch gekennzeichnet, dass** der ringförmige Rand des Außenrings (60) radiale Laschen (46) umfasst, die sich zwischen den vorgenannten Auflageflächen (70) erstrecken und durch Schlitze (50) des Kragens hindurchgehen, wobei ein Ring (48) axial zwischen die radialen Laschen (46) und eine den Kragen (44) tragende radiale Fläche des Deckels (12) eingesetzt ist, um den axialen Halt des Lagers (42) sicher zu stellen.

3. Kupplungsdeckel nach Anspruch 2, **dadurch gekennzeichnet, dass** die Teile (72) des radialen Randes (54) des Außenrings, welche zwischen den Auflageflächen (70) und den radialen Laschen (46) angeordnet sind, in Richtung der Rotationsachse ausgebogen oder ausgeschnitten sind.

4. Kupplungsdeckel nach einem der vorangehenden Ansprüche, **dadurch gekennzeichnet, dass** die Auflageflächen (70) durch die Umfangskante des radialen Randes (54) des Außenrings des Lagers gebildet sind.

5. Kupplungsdeckel nach einem der vorangehenden Ansprüche, **dadurch gekennzeichnet, dass** die Auflageflächen (70) axial von den Wälzelementen (65) des Lagers entfernt sind.

6. Kupplungsdeckel nach einem der Ansprüche 1 bis 5, **dadurch gekennzeichnet, dass** er den Deckel einer Doppelkupplung bildet, welcher eine am Gehäuse der Kraftübertragung befestigte Doppelsteuerung trägt.
